Europäisches Patentamt

European Patent Office

Office européen des brevets

(11) Publication number: **0 421 954 A2**

# EUROPEAN PATENT APPLICATION

(21) Application number: 90830425.6

(22) Date of filing: 28.09.90

(51) Int. Cl.5: **G02C 5/22**

(30) Priority: 06.10.89 IT 8259289

(43) Date of publication of application:
**10.04.91 Bulletin 91/15**

(84) Designated Contracting States:
**AT CH DE ES FR GB LI**

(71) Applicant: APOS S.n.c. di Zanella Margherita
**& C**
**Via Europa 2/A**
**I-31040 Segusino (TV)(IT)**

(72) Inventor: **Coppe, Enrico, c/o Apos S.n.c.**
**Di Zanella Margherita & C., Via Europa, 2/A**
**I-31040 Segusino (Treviso)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Eyeglass arm.**

(57) The present invention relates to an eyeglass arm which comprises an arm body, preferably made of acetate, in which is partially embedded a core the free end of which cooperates with a pre-loaded spring restrained within a hollow tubular element associated with a lug which can be articulated to a front portion.

Coaxially with respect to the tubular element there is slidably provided a contoured element which is in turn coupled, at one end thereof, to the arm body which cooperates, during an extra-opening step, with the front portion.

To a displacement of the arm beyond a normal opening condition, corresponds a displacement of the core inside the tubular hollow element and accordingly of the contoured element so as to provide the extra-opening condition.

FIG. 1

## BACKGROUND OF THE INVENTION

The present invention relates to an eyeglass arm which is so designed and arranged as to be resiliently opened beyond a normal use position.

There are known a plurality of eyeglasses in which an eyeglass arm can be brought to an extraopening position owing to the provision of means comprising, for example,a spring biassing a ball member which, in turn, cooperates with a metal cam formed, for example, on a front portion of the eyeglass frame.

This known eyeglasses, however, are affected by some drawbacks; in fact, the means for obtaining the extra-opening stroke are construction-wise very complex which causes the cost of the eyeglass to excessively increase.

Moreover, for assembling these eyeglasses very skilled operators must be provided which also contributes to a great increase of the production cost.

## SUMMARY OF THE INVENTION

Accordingly, the aim of the present invention is to overcome the above mentioned drawbacks of known eyeglasses by providing an eyeglass arm which can be easily brought to an extra-opening position thereof and which is adapted to resiliently recover from said extra-opening position.

Within the scope of the above aim, a main object of the present invention is to provide such an eyeglass arm which is very simple construction-wise.

Yet another object is to provide an eyeglass arm the component parts of which can be easily assembled even by unskilled operators.

Yet another object of the present invention is to provide an eyeglass arm which can recover to a normal opening position as an extra-opening position is no longer required.

Yet another object of the present invention is to provide such an eyeglass arm which has a very reduced production cost.

According to one aspect of the present invention, the above mentioned aim and objects, as well as yet other objects, which will become more apparent hereinafter, are achieved by an eyeglass arm characterized in that said arm comprises an arm body therein there is partially embedded an arm core having a free end portion which is biassed by a pre-loaded spring restrained within a hollow tubular element associated with a lug which can be articulated to a front portion, coaxially with respect to said tubular element there being slidably provided a contoured element having one end coupled to said arm body and cooperating, during an extra-opening operation, with said front portion.

## BRIEF DESCRIPTION OF THE DRAWINGS

Further characteristics and advantages of the present invention will become more apparent from the following detailed description of a preferred, though not exclusive, embodiment thereof, which is illustrated, by way of an indicative but not limitative example, in the accompanying drawings where:

Figure 1 is a longitudinal cross-sectional view showing the subject eyeglass arm in a normal opening position thereof;
and
Figure 2 is a longitudinal cross-sectional view illustrating the eyeglass arm in its extraopening condition.

## DESCRIPTION OF THE PREFERRED EMBODIMENT

With reference to the figures of the accompanying drawings, there is indicated at 1 an eyeglass arm which comprises an arm body, preferably made of acetate, which is provided with a bent end portion for coupling to an user ear, the other end of said arm, indicated at 3, having an annular re gion 4 of reduced thickness.

This reduced thickness region, in particular, provides a seat for permanently housing a frist end 5 of a contoured element 6, of hollow configuration, which is restrained on said arm body 2 and preferably has the same axis and perimetrical size as said body.

This contoured element 6, in particular, is coaxial with a tubular hollow element 7, which projects nearly perpendicularly from a first lug 8 which can be articulated at a further provided lug 9 coupled to a front portion 10 of an eyeglass frame.

The longitudinal extension of the tubular element 7, as it is coupled to said arm body 2, is less than that of the contoured element 6, the latter being provided with a suitable opening 11 through the first lug 8 and an end portion 12 which projects from the tubular element 7.

This end portion 12 of the contoured element 6 is turned toward the flat surface 13 of the front portion 10, preferably at a metal plate element 14.

The eyeglass arm further comprises an arm core 15 one end of which can be hot embedded axially of the body 2 and the other end of which, indicated at the reference number 16, has a T shape so as to provide an abutment for a resiliently deformable means such as a pressure coil spring 17.

This spring 17 is restrained within the tubular element 7 and abuts against a neck portion 18 formed near the adjoining end of the body 2.

During the assembling, the spring 17 will be pre-loaded so as to force the body 2 to abut against the tubular element 7, in such a way as to arrange the free end of the of the contoured element 6 against the plate 14.

In fact, the use of the eyeglass arm provides that, in addition to a normal use position nearly perpendicular to the front portion 10, the tubular element 7 also cooperates with the plate 14: in this manner the eyeglass arm can be subjected to a further outward displacement owing to the axial sliding movement which can be performed both by the body 2 and the contoured element 6 with respect to the tubular element 7.

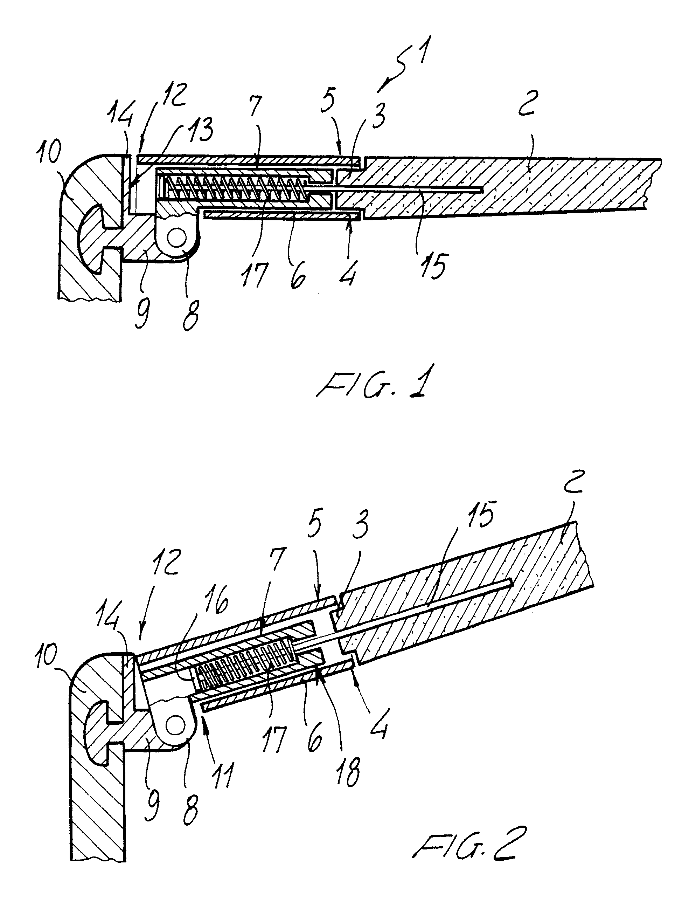

In fact, the spring allows the core 15 to axially slide within said tubular element 7, said spring causing the overall structure to be brought again to the condition of figure 1.

Thus, it should be apparent that the in vention fully achieves the intended aim and objects since an eyeglass arm has been provided which can be brought to an extra-opening position and can be caused to resiliently recover from said extra-opening position.

Moreover the subject eyeglass arm is very simple construction-wise, and the component parts of said arm can be easily assembled even by unskilled operators.

Moreover the eyeglass arm according to the invention can be made at a very reduced cost.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. An eyeglass arm, characterized in that said arm comprises an arm body therein there is partially embedded an arm core having a free end portion which is biassed by a pre-loaded spring restrained within a hollow tubular element associated with a lug which can be articulated to a front portion, coaxially with respect to said tubular element there being slidably provided a contoured element having one end coupled to said arm body and cooperating, during an extra-opening operation, with said front portion.

2. An eyeglass arm according to claim 1, characterized in that said arm comprises a body, preferably made of acetate, which has a bent end portion for coupling to an user ear, the other end portion of said body having an annular reduced thickness region.

3. An eyeglass arm according to claim 2, characterized in that said reduced thickness annular region is adapted to permanently restrain a first end portion of a contoured hollow element which is restrained to said body and has preferably the same axis and perimetrical size as said body.

4. An eyeglass arm according to claims 1 and 3, characterized in that said contoured element is coaxially arranged with respect to a hollow tubular element which nearly perpendicularly projects from a first lug which can be articulated to a further lug restrained to a front portion of an eyeglass frame.

5. An eyeglass arm according to claims 1 and 4, characterized in that the longitudinal extension of said contoured element, as it is restrained to said body, is greater than that of said tubular element, said contoured element having an end portion projecting from that of said tubular element and being moreover provided with an opening through said first lug.

6. An eyeglass arm according to claims 1 and 5, characterized in that said end portion of said contoured element is turned toward a flat surface of said front portion, preferably at a metal plate.

7. An eyeglass arm according to claims 1 and 6, characterized in that said arm further comprises a metal core which has an end portion adapted to be hot embedded axially of said body and the other end thereof being of T shape so as to provide an abutment for a resiliently deformable means such as a pressure coil spring, said coil spring being restrained within said tubular element and abutting against a neck portion formed near the end portion adjoining said body.

8. An eyeglass arm according to claims 1 and 7, characterized in that said spring is preloaded, during the assembling thereof, so as to force said body against said tubular element to locate the free end of said contoured element against said plate.

FIG. 1

FIG. 2